# EUROPÄISCHE PATENTANMELDUNG

(11) **EP 1 106 964 A2**
(43) Veröffentlichungstag der Anmeldung: **13.06.2001**
(21) Anmeldenummer: 00122820.4
(22) Anmeldetag: 20.10.2000
(51) Int. Cl.: G01C 11/02

(54) **Verfahren zur satellitengestützten Erdbeobachtung**

(30) Priorität: 09.12.1999 DE 19959360
(71) Anmelder: Astrium GmbH, 81663 München (DE)
(72) Erfinder: Bitzer, Karl-Ludwig, 88677 Markdorf (DE)
(74) Vertreter: Meel, Thomas

(57) **Zusammenfassung**

Die Erfindung betrifft ein Verfahren zur satellitengestützten Erdbeobachtung. Dabei werden mindestens vier Satelliten, die jeweils mit einem SAR-Radarsensor ausgestattet sind, eingesetzt, wobei die Satelliten sich auf gleichen Bahnhöhen zwischen 400km und 800km und gleichen Inklinationen zwischen ca. 70° und 99° um die Erde bewegen. Die Satelliten sind auf zwei Bahnebenen verteilt, wobei in jeder Bahnebene mindestens zwei Satelliten vorhanden sind.

## Beschreibung

Die Erfindung betrifft ein Verfahren zur satellitengestützen Erdbeobachtung.

Aufgabe der Erfindung ist es, ein Verfahren zur satellitengestützten Erdbeobachtung anzugeben, mit dem für interessierende Lokationen auf der Erdoberfläche mit hoher Wahrscheinlichkeit eine Beobachtung innerhalb von maximal 8 Stunden wiederholt werden kann.

Diese Aufgabe wird mit dem Verfahren nach Patentanspruch 1 gelöst. Vorteilhafte Ausführungen der Erfindung sind Gegenstand von Unteransprüchen.

Gemäß der Erfindung werden mindestens vier Satelliten eingesetzt, die jeweils mit einem SAR-Radarsensor ausgestattet sind. Die Satelliten bewegen sich auf gleichen Bahnhöhen zwischen 400km und 800km und gleichen Inklinationen zwischen 70° und 99° um die Erde. Dabei sind die Satelliten auf zwei Bahnebenen verteilt, wobei in jeder Bahnebene mindestens zwei Satelliten vorhanden sind.

In einer besonders vorteilhaften Ausführung sind die Knotenlinien der Bahnebenen um einen Winkel zwischen 60° und 90° zueinander versetzt.

Mit dem erfindungsgemäßen Verfahren werden Beobachtungswiederholungen erreicht, die mit hoher Wahrscheinlichkeit innerhalb weniger Stunden (≤ 8 Stunden) liegen.

Um das Satellitensystem für vorgegebene Einsatzanforderungen zu optimieren, kann insbesondere der Abstand der Satelliten, und zwar sowohl zwischen Satelliten derselben Bahnebene als auch zwischen Satelliten verschiedener Bahnebenen angepasst werden.

Gemäß einer ersten Einsatzanforderung soll mittels des erfindungsgemäßen Beobachtungsverfahrens gewährleistet werden, dass jede beliebige Lokation auf der Erdoberfläche mit einer Wahrscheinlichkeit von 85% innerhalb der nächsten 8 Stunden nach einer Beobachtung erneut beobachtet werden kann (8h-Beobachtungswiederholung). Dies wird entsprechend einer Ausführung der Erfindung (im Folgenden als Grundmodus bezeichnet) unter Einsatz von genau zwei Satelliten pro Satellitenebene dadurch erreicht, dass der Abstand zwischen den Satelliten derselben Bahnebene zwischen ca. 70° und 90° gewählt wird, und der Abstand zwischen Satelliten unterschiedlicher Bahnebenen zwischen 90° und 140° gewählt wird.
Für den Grundmodus wird die Bahnhöhe vorteilhaft zwischen 480km und 680km und die Inklination der Satellitenebenen zwischen 83° und 98° gewählt. Die Knotenlinien der Bahnebenen sind in einer besonders vorteilhaften Ausführung um 90° zueinander versetzt.

Gemäß einer weiteren Einsatzanforderung soll mittels des erfindungsgemäßen Beobachtungsverfahrens gewährleistet werden, dass eine bestimmte, vorgegebene Lokation auf der Erdoberfläche mit einer Wahrscheinlichkeit von 100% innerhalb der nächsten 8 Stunden wieder beobachtet werden kann. Dies kann mit der erfindungsgemäßen Bahnkonstellation für jede Lokation auf der Erdoberfläche erreicht werden, wobei die erforderlichen Satellitenabstände eine Funktion der vorgegebenen Lokation sind. Derartige Ausführungen werden im Folgenden als Spezialmodus bezeichnet.

Die Erfindung wird anhand von konkreten Ausführungsbeispielen unter Bezugnahme von Zeichnungen näher erläutert. Es zeigen:
- Fig. 1: die Skizze einer erfindungsgemäßen Bahnkonstellation (Grundmodus);
- Fig. 2: die erhaltenen Beobachtungszyklen für ausgewählte Lokationen (Grundmodus);
- Fig. 3: die Skizze einer weiteren erfindungsgemäßen Bahnkonstellation (Spezialmodus);
- Fig. 4: die erhaltenen Beobachtungszyklen für zwei vorgegebene Lokationen (Spezialmodus);
- Fig. 5: eine Darstellung der Zugriffsbereiche eines Satelliten.

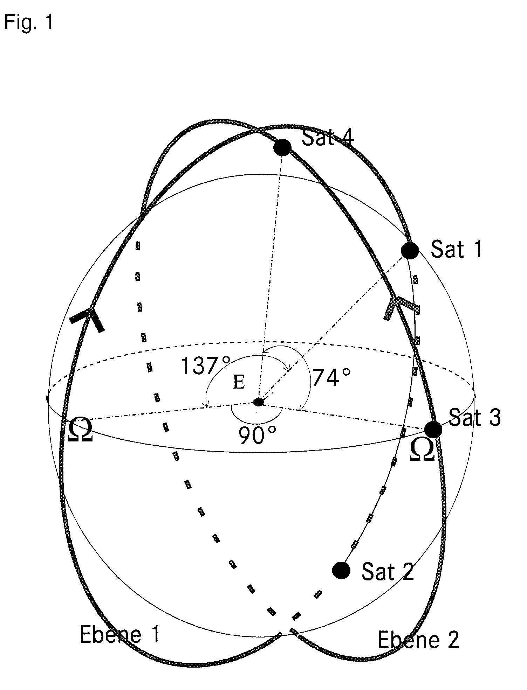

Fig. 1 zeigt eine Skizze zur Veranschaulichung einer erfindungsgemäßen Bahnkonstellation gemäß Grundmodus. Man erkennt die beiden Bahnebenen, in der sich jeweils 2 Satelliten Sat1,Sat2 bzw. Sat3,Sat4 befinden. Die Satellitenbahnen sind im wesentlichen kreisförmig (Exzentrizität e = ca. 0,001) Die Umlaufrichtung ist durch Pfeile gekennzeichnet. Ω bezeichnet jeweils den aufsteigenden Knoten (Schnittpunkt der Äquatorebene mit der Satellitenbahn - je nachdem, ob der Satellit die Äquatorebene von unten nach oben oder von oben nach unten durchstößt, spricht man von aufsteigendem und absteigendem Knoten) der beiden Satellitenbahnen.
Die Verbindungslinie von aufsteigendem und absteigendem Knoten wird als Knotenlinie bezeichnet. Diese ist in Fig. 1 aus Gründen der Übersichtlichkeit nur bis zum Erdmittelpunkt E durchgezeichnet. Vorteilhaft sind die Kontenlinien der Bahnebenen um einen Winkel zwischen 60° und 90°, insbesondere 90° zueinander versetzt. Äquivalent hierzu ist die Aussage, dass die Differenz △Ω zwischen den Rektaszensionen der aufsteigenden Knoten Ω zwischen 60° und 90° liegt, und insbesondere 90° beträgt.
Die Inklination jeder der beiden Bahnebenen (Winkel zwischen Bahnebene und Äquatorebene) beträgt in der gezeigten Ausführung 83°.

Die einzelnen Parameter der gezeigten Konstellation sind in der untenstehenden Tabelle 1 nochmals dargestellt. Ebenfalls angegeben ist der momentane Äquatorabstand der einzelnen Satelliten in ° (Zentralwinkel innerhalb der jeweiligen Bahnebene, bezogen auf den aufsteigenden Knoten Ω als Nulllage). Daraus ergibt sich ein Abstand zwischen den Satelliten Sat1 und Sat2, die sich innerhalb derselben Bahnebene befinden, von 74°. Der gleiche Abstand von 74° gilt für die beiden Satelliten Sat3 und Sat4 der zweiten Bahnebene. Der Abstand zwischen Satelliten auf verschiedenen Bahnebenen, d.h. zwischen Sat1 und Sat3 und zwischen Sat2 und Sat4 beträgt jeweils 137°.

**Tabelle 1**

| Satellit Nr. | Große Halbachse [km] | Inklination [°] | Bahnebene | Anfänglicher Äquatorabstand [°] |
|---|---|---|---|---|
| 1 | 7019,9 | 83 | 1 | 137 |
| 2 | 7019,9 | 83 | 1 | 214 |
| 3 | 7019,9 | 83 | 2 | 0 |
| 4 | 7019,9 | 83 | 2 | 74 |

In der folgenden Tabelle 2 sind die mit der Konstellation nach Fig. 1 erzielten Beobachtungsergebnisse dargestellt (Beobachtungswiederholstatistik). Der Zugriffsbereich des Radarsensors war dabei folgendermaßen begrenzt: lokaler Einfallswinkel zwischen 20° und 55°. Der Winkel zwischen den Kontenlinien der Bahnebenen betrug ca. 90°.

**Tabelle 2**

| Zeitdauer | ≤18h | ≤ 16 h | ≤ 12 h | ≤ 10 h | ≤ 8 h | ≤ 6 h |
|---|---|---|---|---|---|---|
| Prozentuale Anzahl der Beobachtungswiederholungen | 100,0 | 99,5 | 93,4 | 88,6 | 88,1 | 66,0 |

Man kann daraus z.B. entnehmen, dass in 88,10% aller Beobachtungswiederholungen die Beobachtung einer beliebigen Lokation auf der Erdoberfläche innerhalb von 8h möglich ist. Mit einer Wahrscheinlichkeit von 100% kann eine Beobachtung innerhalb von 18h erreicht werden. Die beschriebene Ausführung übertrifft somit die gestellten Anforderungen.

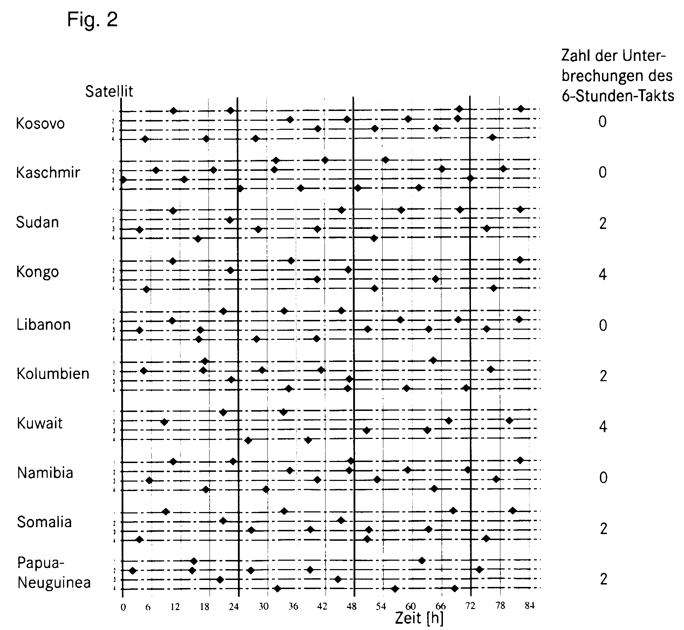

Fig. 2 zeigt die erhaltenen Beobachtungszyklen für ausgewählte Lokationen im Grundmodus. Als schwarze Rauten sind die Beobachtungsmöglichkeiten der vier Satelliten über der Zeit aufgetragen. Man erhält in etwa einen 6-Stunden-Rhythmus für die Beobachtung einer Lokation, der nur in Einzelfällen durch eine längere Wiederholzeit unterbrochen wird. In der rechten Spalte ist die Anzahl der Unterbrechungen des 6-Stunden-Takts innerhalb von 72 Stunden angegeben. Nach 72 Stunden wiederholt sich das gezeigte Beobachtungsmuster.

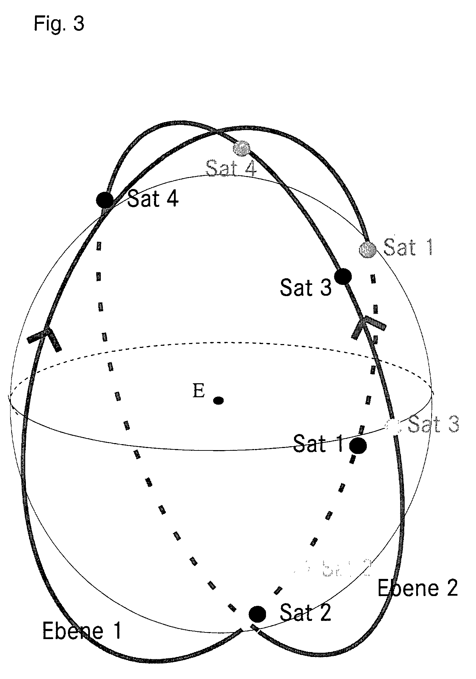

Fig. 3 zeigt die Skizze einer weiteren erfindungsgemäßen Bahnkonstellation gemäß dem Spezialmodus. Für jede beliebige Lokation auf der Erde können die Abstände der Satelliten zueinander derart eingestellt werden (relativ zu dem Satelliten der eigenen Bahnebene wie auch relativ zu den Satelliten der anderen Bahnebene), dass für diese spezielle Lokation ein Beobachtungsrythmus mit einem maximalen Abstand von 8 Stunden mit einer Wahrscheinlichkeit von 100% erreicht wird. Die erforderlichen Satellitenabstände sind eine Funktion der Lokation.
Insbesondere werden die Satelliten aus der Position, die sie im Grundmodus einnehmen, derart verschoben, dass sie untereinander Abstände gemäß dem Spezialmodus einnehmen. Die Änderung der Satellitenabstände erfolgt durch Bahnhöhenänderungen, die zu einer relativen Drift der Satelliten führen und nach Ende der Driftphase wieder rückgängig gemacht werden. Die benötigten Driftdauern liegen typischerweise im Bereich von einigen Tagen.
In der Fig. 3 sind die Satellitenpositionen im Spezialmodus für eine Lokation auf einer geographischen Breite von 55° in schwarzer Farbe eingezeichnet. Zur Veranschaulichung sind die Satellitenpositionen gemäß Grundmodus ebenfalls eingezeichnet (grau).

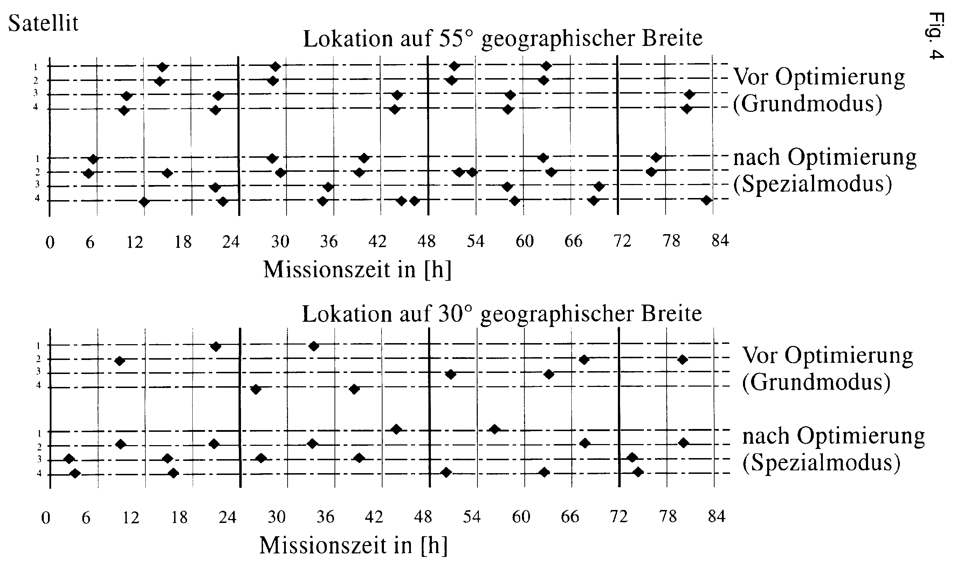

Fig. 4 zeigt die erhaltenen Beobachtungszyklen für zwei Lokationen (oben: 55° geographischer Breite, unten: 30° geographischer Breite). Über der Zeit aufgetragen sind die Beobachtungsmöglichkeiten (schwarze Rauten) für die einzelnen Satelliten des Systems vor der lokalen Optimierung (Grundmodus) und nach der Optimierung (Spezialmodus). Nach der Optimierung erhalt man lokal in etwa einen 6-Stunden-Takt, der die gestellten Anforderungen sogar übertrifft.
In den folgenden Tabellen 3,4 sind für die beiden in Fig. 4 dargestellten Fälle die notwendigen Phasenänderung der einzelnen Satelliten, die dafür erforderliche kurzfristige Höhenänderung sowie der dafür erforderliche Treibstoffbedarf (Satellitenmasse ca. 600kg) dargestellt, um vom Grundmodus in den Spezialmodus zu kommen. Die Übergangszeit beträgt ca. 10 Tage.

**Tabelle 3**

| (Breite 55°) | | | |
|---|---|---|---|
| Sat | Phasenänderung [°] | Treibstoffbedarf [kg] | Bahnhöhenänderung [m] |
| 1 | 44 | 1,2 | 3667 |
| 2 | 14 | 0,4 | 1167 |
| 3 | 45 | 1,2 | 3750 |
| 4 | 34 | 0,9 | 2833 |
| Total | | 3,7 | |

**Tabelle 4**

| (Breite 30°) | | | |
|---|---|---|---|
| Sat | Phasenänderung [°] | Treibstoffbedarf [kg] | Bahnhöhenänderung [m] |
| 1 | 34 | 0,9 | 2833 |
| 2 | 22 | 0,6 | 1833 |
| 3 | 60 | 1,6 | 5000 |
| 4 | 62 | 1,6 | 5167 |
| Total | 4,7 | | |

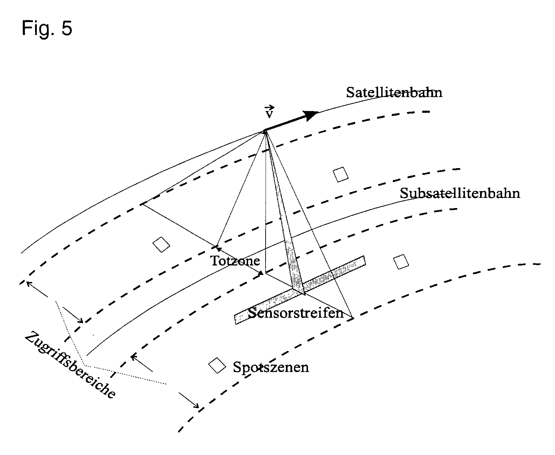

Fig. 5 zeigt eine Darstellung der Zugriffsbereiche eines Satelliten. Eingezeichnet ist die Spur des Satelliten auf der Erdoberfläche, in Fig. 5 als Subsatellitenbahn bezeichnet. Die Zugriffsbereiche des Radarsensors liegen links und rechts der Spur, dazwischen befindet sich die Totzone, in der keine Beobachtung möglich ist. Die Begrenzung der beiden Zugriffsbereiche sind in einer bevorzugten Ausführung derart festgelegt, dass der lokale Einfallswinkel (Winkel zwischen der einfallenden Strahlung und der lokalen Vertikalen) größer als ca. 20° und kleiner als ca. 65° ist. Innerhalb der so definierten Zugriffsbereiche können die interessierenden Gebiete erfasst werden, z.B. in Form eines Sensorstreifens oder als einzelne Spotaufnahme. Diese Beobachtungsgebiete sind beispielhaft eingezeichnet (schraffiert). Um von einem Zugriffsbereich in den anderen zu wechseln, kann der Radarsensor oder der gesamte Satellit um eine Achse parallel zur Flugrichtung gedreht werden.
Die erwähnte Totzone, die prinzipbedingt immer vorhanden ist, wird durch das Vorhandensein des zweiten Satelliten in derselben Bahnebene im Zusammenspiel mit der Erdrotation kompensiert. Dazu wird der Abstand der beiden Satelliten in derselben Bahnebene so gewählt, dass ein Zugriffsbereich des nachfolgenden Satelliten die Totzone des voraus fliegenden Satelliten überdeckt.

Bei dem Radarsensor handelt es sich um einen Radarsensor mit synthetischer Apertur (SAR-Radar). Radarsensor haben gegenüber optischen Systemen den Vorteil, dass sie beleuchtungs- und wetterunabhängig sind. In einer vorteilhaften Ausführung wird ein Sensor mit folgenden Eigenschaften eingesetzt:

| | |
|---|---|
| Bildgröße im Spotlightmodus | 6x6km, |
| Auflösung | kleiner als 2m, |
| SAR-Frequenzbereich | X-Band mit hoher Bandbreite. |

## Patentansprüche

1. Verfahren zur satellitengestützten Erdbeobachtung, dadurch gekennzeichnet, dass mindestens vier Satelliten, die jeweils mit einem SAR-Radarsensor ausgestattet sind, eingesetzt werden, wobei die Satelliten sich auf gleichen Bahnhöhen zwischen 400km und 800km und gleichen Inklinationen zwischen 70° und 99° um die Erde bewegen, und die Satelliten auf zwei Bahnebenen verteilt sind, wobei in jeder Bahnebene mindestens zwei Satelliten vorhanden sind.

2. Verfahren nach Anspruch 1, dadurch gekennzeichnet, dass die Knotenlinien der Bahnebenen um einen Winkel zwischen 60° und 90° zueinander versetzt sind.

3. Verfahren nach Anspruch 1 oder 2, dadurch gekennzeichnet, dass die SAR-Radarsensoren Zugriffsbereiche links und rechts der Satellitenspur erfassen, wobei der lokale Einfallswinkel der Radarstrahlung innerhalb jedes Zugriffsbereichs größer als ca. 20° und kleiner als 65° ist.

4. Verfahren nach einem der Ansprüche 1 bis 3, dadurch gekennzeichnet, dass in jeder Bahnebene genau 2 Satelliten vorhanden sind.

5. Verfahren nach Anspruch 4, dadurch gekennzeichnet, dass der Abstand zwischen den Satelliten derselben Bahnebene zwischen 70° und 90° liegt, und der Abstand zwischen Satelliten unterschiedlicher Bahnebenen zwischen 90° und 140° liegt.

6. Verfahren nach einem der Ansprüche 1 bis 4, dadurch gekennzeichnet, dass durch vorübergehende Bahnhöhenänderungen der Abstand zwischen den Satelliten derselben Bahnebene sowie der Abstand zwischen Satelliten unterschiedlicher Bahnebenen derart geändert wird, dass für eine vorgegebene Lokation auf der Erdoberfläche eine Beobachtungswiederholung innerhalb von 8 Stunden ermöglicht wird.
